# EUROPEAN PATENT APPLICATION

(11) **EP 2 120 307 A1**
(43) Date of publication of application: **18.11.2009**
(21) Application number: 08008899.0
(22) Date of filing: 14.05.2008
(51) Int. Cl.: H02H 7/26

(54) **The ecological transformation center**

(71) Applicant: EMAC (Electromechanical Applications Consulting) Limited, 1521 Nicosia (CY)
(72) Inventor: EMAC (Electromechanical Applications Consulting) Limited, 1521 Nicosia (CY)
(74) Representative: Clarke, Alison Clare

(57) **Abstract**

The ecological transformation center is created by the application of the invented and unique interconnection scheme of the equipment comprising it. This involves the application of a switchgear which is interconnected in such a way with the other equipment, that the main power flow of the loop is channelled only through this switchgear. All the other switchgcar need to handle only the distribution transformer load current with the main consequence to enable the elimination of the SF6 and the use of mineral oil, esters or solid insulation instead. Additionally, the improvement of the reliability of the cable network is accomplished by introducing automatic sectionalizing points and the elimination of the HRC fuses by having the vacuum breaker protect the distribution transformer.

## Description

### PURPOSE OF INVENTION

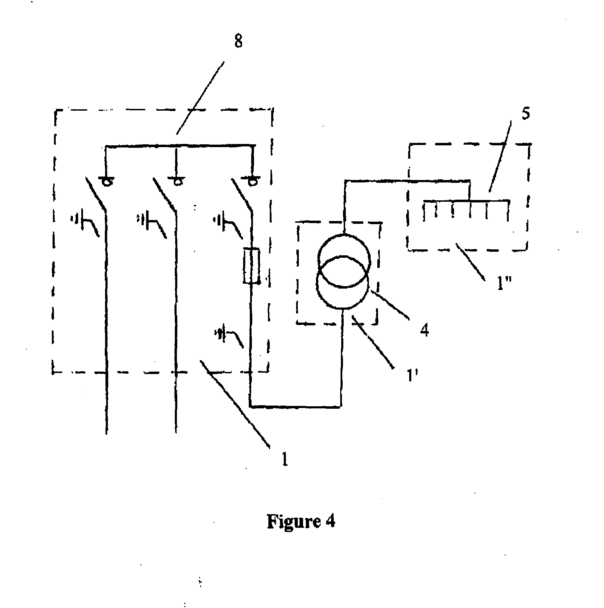

This invention is applied in the electrical transformation centers used in the medium voltage (11kv-45kv) cable electrical power distribution networks. Transformation centers transform the electrical energy from medium voltage into low voltage for consumption and they consist of individual components, namely the transformer (4), the medium voltage switchgear (8), their interconnections and the low voltage distribution panel (5) and these individual components are interconnected as illustrated by the interconnection scheme shown in the single line diagram in Figure 4.

In the switchgear (8) applied in the conventional transformation centers during the last 30-40 years, SF6 has been used as a switchgear insulation and interruption medium in order to reduce the space needs and address the internal arc test requirements, with outstanding results until the Kyoto protocol on climate change defined SF6 as a very potent greenhouse gas.

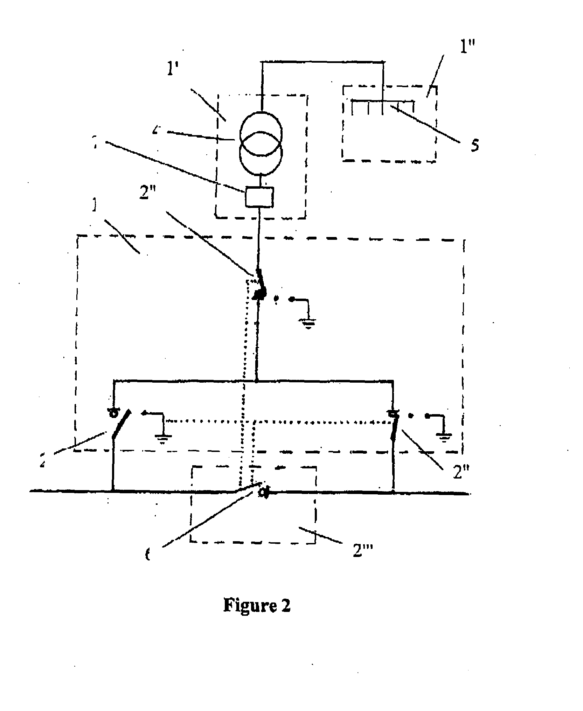

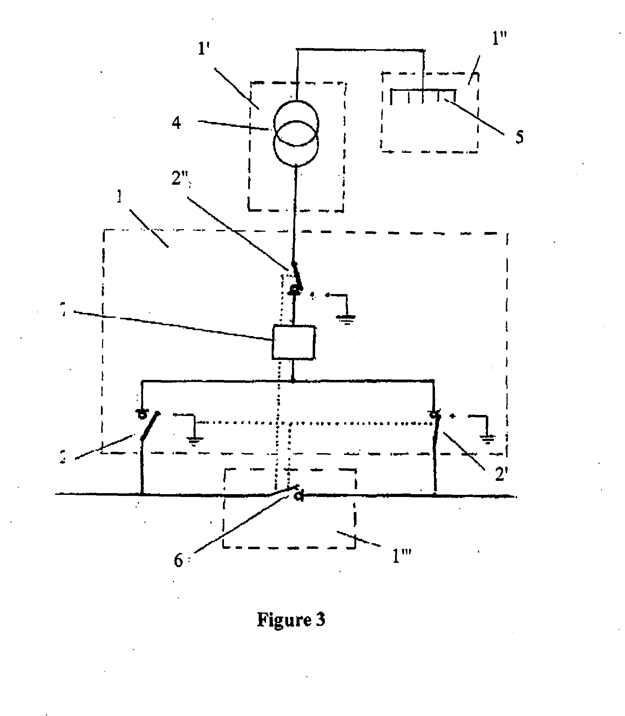

The object of this invention is to create a special interconnection scheme, the application of which will make possible an SF6 free transformation center, and therefore an ecological transformation center, through the application of a breaker (6) in Figure ,1 or a load break switch (6) Figures 2 and 3.

As per the invented interconnection scheme, the individual electrical components of the transformation center, namely, the medium voltage switchgear, the transformer and their cable or busbar interconnections, are accomplished in such a way, that the need of the use of SF6 as an interrupting or insulating material is completely eliminated, thus achieving the creation of a compact ecological transformation center.

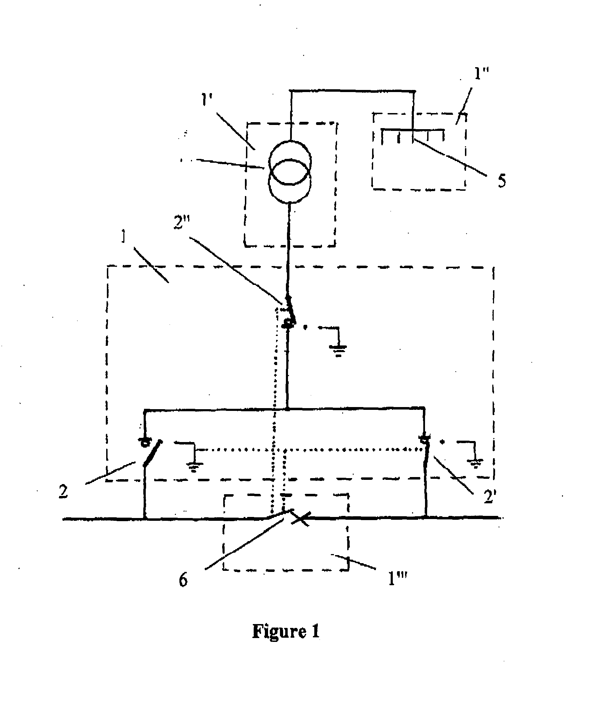

Additionally, the application of the invented interconnection scheme of the ecological transformation center components, by channeling the loop main electrical power flow through one only breaker (6) in Figure 1, reduces the duty, maintenance requirements and cost on all the other switchgear (2, 2', 2") as shown in Figure 1. It also eliminates the need to use HRC fuses for the distribution transformer (4) in Figure 1, and protects and improves the reliability of the cable network by introducing additional automatic sectionalizing points in the main power flow loop.

### BACKGROUND OF THE INVENTION

Electrical transformation centers consist of three different fundamental components, namely the transformer (4), the medium voltage equipment (switchgear and cable interconnections) (8) and the low voltage distribution panel (5) as shown in Fig.4. All these components are independent.

In all conventional existing interconnection schemes the main power flow is channeled from the main loop cable via a switchgear to a busbar and channeled back to the main loop cable via an other switchgear, as shown in the single line diagram in Figure 4. There is a T-off connection from the busbar to the transformer via a switchgear which incorporates the protection of the transformer, which consists either of a combination of a load break switch and HRC fuses, or a breaker.

Since the majority of these transformation centers are serving urban areas where the value of real estate is very high and availability of space is extremely limited, the need for optimizing the size of the transformation centers and more particularly the size of the medium voltage switchgear, resulted in using SF6 as an interrupting and insulating dielectric instead of air, with excellent results in reducing the overall size of the transformation centers.

According to the Kyoto protocol on climate change, SF6 is documented as a very potent greenhouse gas and therefore the need to reduce or possibly eliminate its use is obvious.

Electrical load current interruptions in SF6 generate toxic materials, and special precautions are required for handling used switchgear, or in the event of an accident.

The pressure to monitor and register the SF6 content in an electrical utility is becoming an expensive obligation in many countries.

For all of the reasons mentioned above, alternatives which eliminate the use of SF6 without increasing the overall size of the transformation center are actively pursued.

Another dielectric which could be used instead of SF6 is the mineral oil, natural, or synthetic esters as they are already used in transformers or solid insulation.

The limitation these dielectric fluids have, is the difficulty to fulfill the "internal arc test" requirements and therefore it is impossible to simply substitute the SF6 with these dielectric fluids without a modification in the conventional interconnection scheme of the transformation center components.

In order to increase the reliability in the medium voltage underground cable distribution network in addition to the main feeder breaker in the power substation, several other breakers are required in series with the main feeder breaker in order to increase the number of automatic sectionalizing points which will improve reliability by identifying faster the failure position, reconfiguring the network remotely and automatically, reducing the affected customers' power failure to the minimum. For this reason several electrical utilities replace one of the SF6 load break switches with a vacuum breaker without modifying the conventional interconnection scheme of the transformation center.

In order to reduce the consequences of the erratic malfunctioning of the HRC fuses, several electrical utilities relace the commonly used combination of SF6 load break switch and HRC fuses with a vacuum breaker without changing at all the existing conventional interconnection scheme of the transformation centers.

### DESCRIPTION OF THE INVENTION

The ecological transformation center is created by the application of the interconnection scheme as shown in the single line diagram of Figures 1, 2 and 3 which introduces a switchgear (6) through which the main power flow is channeled and two or three load break and grounding switches (2, 2', 2") through which only the load current of the distribution transformers is channeled.
- The introduction of a switchgear, which can either be a load break switch or preferably a breaker, which is interconnected as per the invented scheme, channels only through this switchgear the main loop power flow.
- As a consequence of me way this switchgear (6) is interconnected and interlocked with the other switchgear (2, 2', 2"), reduces dramatically their duty requirements, provides protection to their enclosure and therefore permits the use of mineral oil, air, esters or solid insulation to be used as insulating dielectric material, eliminating completely the need for the use of SF6.
- By installing all the other switchgear (2, 2', 2") except the breaker (6) in Figure 1, or the load break switch (6) in Figures 2 and 3 in an enclosure filled with mineral oil or esters designed to have the required pressure relief and gas-cooling facilities, the internal arc test requirement can be fulfilled, or air or solid insulation can be used instead. By the use of the breaker (6) with the appropriate settings as the protection device, all other switchgear (2, 2', 2") can be embedded in the transformer tank using the transformer dielectric fluid (mineral oil or esters) as a common insulation medium, and using only two switches instead of three.
- By the introduction of the breaker (6) in Figure 1, and as this breaker is in the main power flow loop and in series with the main feeder breaker in the HT/MT power substation and properly coordinated with it, a very cost effective automatic sectionalizing point in the main power loop is created, which increases the overall reliability of the cable network.
- By the use of the breaker (6) in Figure 1, the need for the HRC fuses is eliminated, since the breaker with its appropriate relay settings can protect the transformer very efficiently against overload and short-circuit damages. In addition to that, a variety of sensors i.e. pressure, temperature, oil level etc. can be interlocked with the breaker tripping circuitry and facilitate a very demanding transformer protection for critical applications e.g. hospitals.
- By interlocking the breaker (6) in Figure 1, or the load break switch (6) in Figures 2 and 3 with the other two switches (2 and 2') in Figures 1, 2 and 3, we can use the very same switches (2 and 2') in Figure 1, 2 and 3, for grounding the incoming and outgoing cables of the transformation center, thus eliminating the need for grounding switches for the breaker (6) in Figure 1, or the load break switch (6) in Figures 2 and 3. Note that always, one of the two switches (2 and 2') in Figures 1, 2 and 3, is closed (N.C.) and the other must be open (N.O.) and vice versa.

### DESCRIPTION OF DRAWINGS

In order to complete the description that is being made and with the object to assist the better understanding of the characteristics and the details of the invention, according to the preferred examples of practical embodiment thereof, figures are included as an integral part of the written description, wherein the following has been represented in an illustrative and non-limiting manner.

### Figure 1

Shows the single line diagram of the ecological transformation center, indicating clearly the invented interconnection scheme of the breaker (6) through which the main power flow of the distribution line is channeled, the load break and grounding switches (2, 2' and 2") through which only the transformer load current is channeled, and their interlocking functions with each other and the breaker.

### Figure 2

Shows the single line diagram of the ecological transformation center, indicating clearly the invented interconnection scheme of the load break switch (6) through which the main power loop of the distribution line is channeled, the load break and grounding switches (2, 2' and 2") through which only the transformer load current is channeled, and their interlocking functions with each other and the load break switch. The transformed (4) includes into its own tank (1'), its own protection (7), which makes it a self-protected transformer.

### Figure 3

Shows the single line diagram of the ecological transformation center, indicating clearly the invented interconnection scheme of the load break switch (6) through which the main power flow of the distribution line is channeled, the load break and grounding switches (2, 2' and 2") through which only the transformer load current is channeled, and their interlocking functions with each other and the load break switch. The transformer protection (7) is installed together with the load break and grounding switchers (2, 2' and 2"), in the same tank (1).

### Figure 4

Shows the single line diagram of the conventional transformation center, indicating clearly the existing conventional interconnection scheme of the transformation centers for the transformer(s) (4), the low voltage panel(s) (5) and the ring main unit (8) which is consisting of three load break switches with their grounding arrangements and the HRC fuses for the distribution transformer protection.

### PREFERRED EMBODIMENTS OF THE INVENTION

The interconnection scheme of the equipment used for the invented ecological transformation center is utilized primarily in the cable networks and its single line diagram is shown in Figures 1, 2 and 3.

The breaker (6) in Figure 1 or the load break switch in Figures 2 and 3, shown in the single line diagrams of the invented interconnection scheme, is interconnected with all the other transformation center equipment in such a way, that the distribution line main power flow (loop) is channeled only through this switchgear. All the other switches are handling only the transformer(s) load current and the maximum grounding current.

As a consequence of the application of this invention, the load break switches (2, 2,' and 2") need to handle only the transformer(s) load current(s) and therefore their operational duty, life and maintenance requirements are improved dramatically.

The same switches are performing the switchgear (6) cable grounding function through their 3-position arrangement, thus reducing space and cost requirements.

By combining the two or three load break switches (2, 2' and 2") very close physically, and having the breaker (6) provide protection for them, the elimination and replacement of the SF6 through other insulating material (air, oil. Esters, solid) is made possible, trough the reduction of the arc test requirements.

Installing the breaker (6) in Figure 1 in the main-line and making it handle the main power flow, adds an extra automatic sectionalizing point in the main loop, increasing the reliability of the network and facilitating the instant identification and isolation of the faulty portion of the network and thus accelerating power restoration to the consumers.

As per the invented interconnection scheme of the ecological transformation center as in Figure 1, the way the breaker (6) is interconnected with the transformer (4), allows for the elimination of the conventional HRC fuses, and the breaker protects the transformer(s) located in the same transformation center or further down the line with the proper programming of the protection coordination requirements.

The utilization of the invented interconnection scheme for the ecological transformation center allows for a very compact design with significant flexibility in the integration possibilities of the equipment involved in a various combination of containers i.e. 3 different containers for the breaker or the load break switch, the switches and the transformer or 2 different containers for the breaker or load break switch together with the switches and the transformers, or one container including the breaker, the switches and the transformer and facilitating the possibility of compact submersible transformation centers, operated from a top main hole.

Using a variety of sensors i.e. pressure, temperature load current, dielectric fluid sensors etc. the ecological transformation center will be easily monitored and controlled locally or remotely.

The utilization of the breaker (6) in Figure 1 to be positioned in the main feeder loop allows more flexibility in the overall architecture of underground cable networks.

## Claims

1. Ecological transformation center, especially created to be used in electrical medium voltage cable distribution networks consisting of one or more distribution transformers (4), one or more low voltage distribution panel(s) (5), is **characterized** because it includes at least two (2-2') load break and grounding switches, which are interlocked with each other, one in the open position (N.O.) and the other in the closed position (N.C.) or vice versa, through which only the distribution transformer(s) (4) load current is circulating, and one breaker (6) which is interlocked with the two load break and grounding switches (2-2"), and through this breaker (6) only, the main power flow of the cable distribution line is channeled.

2. Ecological transformation center according to claim 1, **characterized in that** the load break and grounding switches (2-2') in the grounding position cover the grounding requirements of the switchgear (6) incoming and outgoing feeder cables.

3. Ecological transformation center according to claim 1, **characterized in that** the breaker (6) protects the load break and grounding switches (2, 2', 2") against short circuit arcing, and reduces significantly the internal arc test requirements for the enclosure containing them.

4. Ecological transformation center according to claim 1, **characterized in that** the dielectric used for the load break and grounding switches (2-2'-2") and for the breaker (6) is air, esters, mineral oil or solid in substituting the conventional SF6 and keeping the overall dimensions of the ecological transformation center reduced.

5. Ecological transformation center according to claim 1, **characterized in that** the protection of the transformer(s) is provided by the breaker (6) through the special interlocking with the load break switches (2, 2') and the required fault sensing and protection relay programming.

6. Ecological transformation center according to claim 1, **characterized in that** the automatic protection and sectionalization of the main power line is performed by using the relevant overcurrent sensors with the breaker (6) and programming the breaker overcurrent relay accordingly.

7. Ecological transformation center according to claim 1. **characterized in that** the complete remote and automatic monitoring and control, is performed by adding current sensing devices in the distribution transformer(s) (4) circuit and various sensors in the transformer(s) (4), like pressure, temperature, dielectric fluid level e.t.c. and motorizing the load break and grounding switches accordingly.

8. Ecological transformation center, according to claim 1, **characterized in that** the switchgear (6) can be can be either a breaker or a load break switch in combination with a transformer protection unit (7) as per Figure 3, or a self protected transformer(s) (4) in Figure (2).

9. Ecological transformation center, according to claim 1, **characterized in that** it enables having either, three separate enclosures (1-1'-1"'), or (X) and (1') combined in one enclosure, or ( 1) and ( 1"') combined in one enclosure.

## Amended claims

### Amended claims in accordance with Rule 137(2) EPC.

**1.** Transformation center, utilized in electrical medium voltage distribution networks is **characterized** because the interconnection system of one or more distribution transformer(s) (4), three, 3-position (on-off-ground) load break switches (2-2'-2") and one vacuum breaker or load break switch (6),
a) channels the main power flow only through the vacuum breaker (6) by positioning the breaker in the main current path, allowing for automatic sectionalization of the distribution line by sensing and reacting to all kind of line faults, including directional zero sequence faults and at the same time the vacuum breaker (6) provides the required protection to the distribution transformer and eliminates the conventional HRC fuses and their spurious operations;
b) utilizes the two load break and grounding switches (2-2') in an interlocked concept with the breaker (6) and with each other, one in the open position (N.O.) and the other in the closed position (N.C.) or vice versa and the third optional transformer disconnecting load break switch (2") through which only the load current of the distribution transformer(s) is circulating, seducing their duty cycle and eliminating the need to use SF6 and allowing the use of environmentally accepted dielectrics, creating a compact ecological transformation center.
**characterized in that** the protection of the transformer(s) is provided by the breaker (6) through the special interlocking with the load break switches (2, 2') and the required fault sensing and protection relay programming.

**2.** Ecological transformation center according to claim 1, **characterized in that** the 3-position load break and grounding switches (2-2) in the grounding position cover the grounding requirements of the switchgear (6) incoming and outgoing feeder cables.

**3.** Ecological transformation center according to claim 1, **characterized in that** the breaker (6) protects the load break and grounding switches (2, 2', 2") against short circuit arcing, and reduces significantly the internal are test requirements for the enclosure containing them.

**4.** Ecological transformation center according to claim 1, **characterized in that** the dielectric used for the load break and grounding switches (2-2'-2") and for the breaker (6) is air, esters, mineral oil or solid in substituting the conventional SF6 and keeping the overall dimensions of the ecological transformation center reduced.

**5.** Ecological transformation center according to claim 1,

**6.** Ecological transformation center according to claim 1, **characterized in that** the automatic protection including directional sequence sensing and sectionalization of the main power line is performed by using the relevant current sensors with the breaker (6) and programming the breaker relay accordingly.

**7.** Ecological transformation center according to claim 1, **characterized in that** the complete remote and automatic monitoring and control, is performed by adding current sensing devices in the distribution transformer(s) (4) circuit and various sensors in the transformer(s) (4), like pressure, temperature, dielectric fluid level e.t.c. and motorizing the load break and grounding switches accordingly.

**8.** Ecological transformation center, according to claim 1, **characterized in that** the switchgear (6) can be can be either a breaker or a load break switch in combination with a transformer protection unit (7) as per Figure 3, or a self protected transformer(s) (4) in Figure (2).

**9.** Ecological transformation center, according to claim 1, **characterized in that** it enables having either, three separate enclosures (1-1'-1'"), or (1) and (1') combined in one enclosure, or (1) and (1'") combined in one enclosure.
